# EUROPEAN PATENT SPECIFICATION

(11) **EP 1 600 342 B1**
(45) Date of publication and mention of the grant of the patent: **14.03.2007**
(21) Application number: 04706290.6
(22) Date of filing: 29.01.2004
(51) Int. Cl.: B60R 22/28, B60R 22/36

(54) **SEAT BELT RETRACTOR**
SICHERHEITSGURTAUFROLLER
RETRACTEUR DE CEINTURE DE SECURITE

(30) Priority: 31.01.2003 JP 2003024342
(43) Date of publication of application: 30.11.2005
(73) Proprietor: Ashimori Industry Co., Ltd., Osaka-shi, Osaka 550-0014 (JP)
(72) Inventor: KATAYAMA, Takao, Osaka 565-0821 (JP)
(74) Representative: Appelt, Christian W.
(86) International application number: PCT/JP2004/000793
(87) International publication number: WO 2004/067338

(56) References cited:
- DE-U1- 20 210 812
- JP-A- 9 286 302
- JP-A- 2001 206 193
- JP-A- 2001 287 621
- JP-A- 2001 301 569
- JP-A- 2002 053 007
- US-A1- 2002 017 583

## Description

### TECHNICAL FIELD

The present invention relates to a seatbelt retractor provided with an energy-absorbing means, which, in case of a vehicle emergency, restrains a webbing from being pulled out to restrain movements of vehicle occupant and absorbs an impact load acting on the vehicle occupant.

### BACKGROUND TECHNOLOGY

There has been known in the seatbelt retractor which imposes a large resistive load on the seatbelt at the moment of a vehicle emergency and thereafter reduces the resistive load to achieve the security of vehicle occupant. There has been known, as an example, JP 2001-301569A (EP1149743) which discloses a webbing take-up apparatus (seatbelt retractor) according to the preamble of claim 1 including a lock base (locking base) provided on one end of a cylindrical spool (take-up drum) which winds up webbing in a manner that a relative rotation with the spool is possible, a lock means which prevents a rotation of the lock base in the direction of the webbing pulled out in case of a vehicle emergency, a torsion bar inserted into the spool, one end of which is coupled with the spool, the other end of which is coupled with the lock base, which generates a torsional deformation in a state where the lock means prevents a rotation of the lock base in the direction of the webbing pulled out, a wire, one end of which is fixed to the lock base, the other end and the medium part of which are inserted into the spool, which is pulled out from the spool when the spool rotates relatively with the lock base, and a cutting means capable of cutting the wire.

In this webbing take-up apparatus, since the wire with the one end thereof fixed to the lock base is inserted into the spool (take-up drum), when a rotation of the lock base is prevented in case of a vehicle emergency, the torsional load in the torsion bar and the pulling load in the wire act on the webbing as a force limiting load. And, the wire is cut at an arbitrary timing, whereby the force limiting load is reduced to only the torsional load in the torsion bar.

In the conventional webbing take-up apparatus, in the duration from the moment that the cutting means comes in contact with the wire pulled out from the spool (take-up drum) till the moment that the cutting means cuts the wire away, the resistance when the pulling load restrains a pull-out of the wire becomes larger than the resistance when the wire is pulled out. However, after the wire is cut away, the resistance by the wire completely disappears, and hence the difference of the tensile force in a webbing increases in the duration. Accordingly, a vehicle occupant is restrained from moving forward at the actuation of cutting the wire, however the occupant is made to move forward abruptly after the wire is cut away, which creates the apprehension that the occupant do not stop at a specified position. Further, since the wire is cut vertically to the pull-out direction, the cutting position drifts depending on the tensile force of the webbing, namely, the pull-out speed of the wire being pulled out from the spool. Accordingly, the cutting is not performed at a constant position, and the resistance in the webbing pulled out is not stabilized, which is disadvantageous.

Therefore, an object of the present invention is to solve the above conventional problems.

That is, the first object of the invention is to make an energy-absorbing means which provides a resistive load capable of appropriately selecting the amount of the energy absorption, and to thereby halt the wire at a constant position and stabilize the resistance in the webbing pulled out.

The second object is to make an energy-absorbing means which halts to provide the load, and to make it capable of freely adjusting the timing of halting, in a manner that it is able to perform an optimum energy absorption in correspondence with the physical make-up of vehicle occupant, scale of a vehicle collision, and time and so forth.

The third object is to make an energy-absorbing members not generate excessive energy absorptions in switching the resistive loads, and to stabilize the provision of load by the energy-absorbing members, so that the vehicle occupant can easily be halted at specified positions.

### DISCLOSURE OF THE INVENTION

1. A seatbelt retractor according to a first aspect of the invention comprises a take-up drum on which webbing is wound, a take-up shaft, one end of which is coupled with one end of the take-up drum in a manner that a relative rotation with the take-up drum is impossible, which is biased in the direction of the webbing taken up, an emergency lock mechanism which restrains a rotation in the direction of the webbing pulled out, a clutch mechanism located near the other end of the take-up shaft, a plate body provided close to a side on the other end of the take-up drum, which is provided on the other end of the take-up shaft through the clutch mechanism, and an energy-absorbing means located between the side of the take-up drum and the plate body, which provides a resistive load by mutually performing a relative rotation, wherein the clutch mechanism switches a first state where the plate body is provided on the other end of the take-up shaft in a manner that a relative rotation with the take-up shaft is impossible into a second state where the plate body is provided on the other end of the take-up shaft in a manner that a relative rotation with the take-up shaft is possible, and the clutch mechanism includes a clutch release mechanism which actuates a switching at an arbitrary timing.
2. A seatbelt retractor according to a second aspect of the invention further comprises a take-up shaft being a torsion bar inserted through the take-up drum, with the emergency lock mechanism located on the other end of the torsion bar, and a lock actuating device which actuates the emergency lock mechanism in case of a vehicle emergency,
   In the seatbelt retractor according to the first aspect or the second aspect of the invention, as the lock actuating device actuates the emergency lock mechanism in case of a vehicle emergency, the other end of the take-up shaft or the torsion bar is restrained from rotating in the direction of the webbing pulled out, and the take-up drum is also restrained from rotating. At this moment, as the webbing is pulled out by a pull-out force more than a predetermined value, the one end of the take-up shaft or the torsion bar 4 is coupled with the take-up drum being driven to rotate in a manner that a relative rotation is impossible, and the other end thereof is coupled with the emergency lock mechanism which has restrained the rotation in a manner that a relative rotation is impossible, therefore, the take-up shaft or the torsion bar, while generating a torsional deformation, rotates the take-up drum. At the same time, there generates a relative rotation between the take-up drum being rotating and the plate body of which relative rotation is disabled by the clutch mechanism on the other end of the take-up shaft or the torsion bar with the rotation restrained, and a resistive load is supplied by the energy-absorbing (EA) means.
   In the first state where a relative rotation of the plate body with the other end of the take-up shaft or the torsion bar is disabled by the clutch mechanism, the take-up shaft or the torsion bar (first energy-absorbing means) and the second energy-absorbing (EA) means are in operation. The clutch mechanism being put in operation through a clutch actuating mechanism at an arbitrary timing switches the plate body into the second state where the plate body is able to rotate relatively with the other end of the take-up drum or the torsion bar, and the clutch mechanism makes the take-up shaft or the torsion bar alone perform the energy absorption (EA).
   Thereby, it is possible to appropriately select the amount of the energy absorption, by actuating both of the take-up shaft or the torsion bar (first energy-absorbing means) and the second energy-absorbing means, or only the take-up shaft or the torsion bar at the actuating time of the energy absorption. And, after actuating the energy absorption by using both of the first and the second energy-absorbing means, in order to achieve an optimum energy absorption in correspondence with parameters such as physical make-up of vehicle occupant, scale of a vehicle collision, and time, it is possible to stop the provision of load by the second energy-absorbing means on the way, and to perform the energy absorption only by the take-up shaft or the torsion bar. Since the provision of the resistive load is stopped without any contact with the energy-absorbing means (wire) being the second energy-absorbing means, excessive energy absorption is not generated in the switching, the provision of load becomes stabilized, and the vehicle occupant can easily be halted at specified positions.
3. A seatbelt retractor according to a third aspect of the invention is that, in the seatbelt retractor according to the second aspect of the invention, the clutch mechanism includes in a manner that a relative rotation with the emergency lock mechanism is impossible, at least one joint pawl pivoted to be turnable to a side of the plate body on the opposite side to the take-up drum, which comes in contact with the joint plate to turn outwardly, a release ring retained by a casing fixed on a side plate of a housing on the other end of the torsion bar to be movable in the axial direction while rotating, which is located on a periphery of the joint pawl; and a clutch release mechanism which actuates the release ring attached to the casing.
   According to the third aspect of the invention, when the lock actuating device actuates the emergency lock mechanism, until the torsion bar and the second energy-absorbing (EA) means provide loads in practice, the webbing is pulled and the take-up drum is rotated in the direction of the webbing pulled out. At this moment, in the duration till rotating relatively with the take-up drum, the plate body slightly rotates integrally with the take-up drum, so that a relative rotation is generated between the plate body and the joint plate coupled with the emergency lock mechanism to be impossible of a relative rotation, and the inner circumference of the joint pawl comes in contact with the joint plate, which presses the joint pawl outwardly. Since the release ring is located on a periphery of the joint pawl, the joint pawl is restrained from expanding outwardly. As the clutch release mechanism actuates the operation, the release ring is made to move in the axial direction of the torsion bar while rotating, and is detached from the circumference of the joint pawl, and hence the joint pawl expands outwardly. Since the plate body is accordingly detached from the joint plate which has restrained the rotation of the plate body, the plate body rotates integrally with the take-up drum, the provision of the resistive load by the wire (energy-absorbing member) is halted, and only the energy absorption (EA) by the torsion bar is performed.
   Although the plate body rotates integrally with the take-up drum in the normal use of the seatbelt retractor, when the emergency lock mechanism actuates the operation, the plate body is put into the state where it cannot rotate integrally with the take-up drum, while when the clutch release mechanism of the clutch mechanism actuates the operation, it is put into the state where it can rotate integrally with the take-up drum.
   Thus, according to the third aspect of the invention, if the setting of the clutch mechanism is performed in the assembling, the clutch mechanism can be easily installed.
   Further, when the clutch release mechanism actuates the operation, the operation is performed in the state where the clutch mechanism is restrained from rotating, and hence the operation by the clutch release mechanism is stabilized.
   Further, at the moment when the joint pawl expands outwardly, the load of the energy-absorbing means becomes zero without increasing, and the switching of the load can smoothly be performed.
4. A seatbelt retractor according to a fourth aspect of the invention is that, in the seatbelt retractor according to the third aspect of the invention, the clutch release mechanism includes a gas generator which generates gas in a cylinder attached to the casing at an arbitrary timing, and a piston pressed and driven by a gas pressure in the cylinder, which presses the circumference of the release ring to rotate the release ring.
   Thereby, the piston pressed and driven by the gas generator in the cylinder presses the circumference of the release ring and rotates the release ring, thus detaching the clutch.
5. A seatbelt retractor according to a fifth aspect of the invention is that, in the seatbelt retractor according to the fourth aspect of the invention, the release ring is provided with a contact on the circumference thereof, which comes in contact with the piston, and plural tapered parts located with a uniform spacing on the circumference thereof, and the casing which holds the release ring is provided with projections corresponding to the tapered parts of the release ring.
   Thereby, the tapered parts provided on the circumference of the release ring are guided to the projections of the casing, and the release ring being rotated is made to move in the axial direction of the torsion bar. At this moment, since the tapered parts are located on the circumference of the release ring with a uniform spacing, it is possible to move the release ring in a state where the plane of the release ring is vertical to the axis.
   According to the fourth and fifth aspects of the invention, although an outward force by the joint pawl acts on the inner circumference of the release ring, the piston driven by the gas pressure rotates the release ring in one breath, and it can release the joint pawl toward the circumference at once in defiance of the frictional resistance by contacts.
   Since the release ring is made to move in the state where the plane of the release ring is vertical to the longitudinal direction of the torsion bar, the contact of the joint pawl with the release ring is released at once, in the switching of the clutch, there is not any excessive load generated, except the load supplied by the second energy-absorbing means.
6. A seatbelt retractor according to a sixth aspect of the invention is that, in the seatbelt retractor according to any one of the first through the fifth aspects of the invention, the clutch mechanism is provided with a pawl holder which positions and supports the joint pawls, and the pawl holder is provided with ribs integrally formed thereon, which biases the joint pawls in the axial direction and will not return the joint pawls to the initial positions after operating the joint pawls.
   Thereby, the positions of the joint pawls in the first state are maintained by biasing the springs. The outwardly expanded joint pawls are restrained from returning to the initial positions by the ribs of the pawl holder, and are retained at the positions where they are expanded. Further, the joint pawls retained there restrain the release ring from returning to the circumference of the joint pawls.
7. A seatbelt retractor according to a seventh aspect of the invention is that, in the seatbelt retractor according to any one of the second through the sixth aspects of the invention, the second energy-absorbing means includes a curved path provided on a side of the take-up drum on the other end of the torsion bar, and a wire, one end of which is fixed to a take-up part of the plate body, a substantially medium part of which is located in the curved groove.

Thereby, when the emergency lock mechanism actuates the operation, a tensile force acting on the webbing which exceeds a predetermined value generates a relative rotation between the take-up drum being rotating and the plate body on the other end of the torsion bar with the rotation restrained, and hence the take-up drum being rotating winds up the wire, one end of which is fixed to the take-up part of the plate body with the rotation restrained, into the take-up part of the plate body, while deforming the wire in the curved path at any time.

According to the sixth and seventh aspects of the invention, since the joint pawls are biased by a spring force, if, in the normal use of the seatbelt retractor, the joint pawls are made to rotate together with the take-up drum and so forth, the joint pawls will be positioned at the specified positions, which stabilizes the operation of the joint pawls.

The plate body prevents the joint pawls and the release ring from returning to specified positions in the first state where the plate body is provided on the other end of the take-up drum in a manner that a relative rotation is impossible from the second state where the plate body is provided on the other end of the take-up drum in a manner that a relative rotation is possible. Therefore, it is possible to stabilize a resistive load by the torsion bar without adding a load by the second energy-absorbing means.

It is also possible to make the second energy-absorbing means at low cost with a simple structure, without using a member separately.

### BRIEF DESCRIPTION OF THE DRAWINGS

Fig. 1 is a front view of the whole seatbelt retractor according to the present invention;
Fig. 2 is an exploded perspective view explaining the assembling of a housing, a take-up drum, a torsion bar, a locking base, a base stopper, and so forth of the seatbelt retractor illustrated in Fig. 1;
Fig. 3 is an exploded perspective view explaining the assembling of the take-up drum, the plate assembly, a retainer, and a pawl holder;
Fig. 4 is an exploded perspective view explaining the assembling of a plate assembly which is illustrated in Fig. 3;
Fig. 5 is a side view of the plate assembly;
Fig. 6 is a front view partly in section of the plate assembly;
Fig. 7 is a partly enlarged front view in section illustrating another embodiment of the plate assembly;
Fig. 8 is a front view in section of an assembly in which the plate assembly and the take-up drum illustrated in Fig. 3 are assembled;
Fig. 9 is a partly cutaway side view of the assembly illustrated in Fig. 8;
Fig. 10 is a front view in section, in which the assembly illustrated in Fig. 8 is turned;
Fig. 11 is a partly cutaway side view of the assembly illustrated in Fig. 10;
Fig. 12 is an exploded perspective view explaining the assembling of a housing, a casing, and so forth, which are illustrated in Fig. 2;
Fig. 13 is an exploded perspective view of a release ring, the casing, a piston, a gas generator, a gas generator holder, and so forth;
Fig. 14 is an enlarged perspective view of the pawl holder;
Fig. 15 is an enlarged perspective view of a joint pawl;
Fig. 16 is a partly cutaway side view of a clutch mechanism before actuating the operation;
Fig. 17 is a plan view in section of the clutch mechanism illustrated in Fig. 16;
Fig. 18 is a partly cutaway side view explaining a state where the clutch mechanism is engaged (first state);
Fig. 19 is a plan view in section of the clutch mechanism illustrated in Fig. 18;
Fig. 20 is a partly cutaway side view explaining a state where the clutch mechanism is released (second state);
Fig. 21 is a plan view in section of the clutch mechanism illustrated in Fig. 20;
Fig. 22 is an exploded perspective view explaining the assembling of the locking base, a lock clutch, a cover, and so forth;
Fig. 23 is an exploded perspective view explaining the assembling of the torsion bar, the lock pawl, the locking base, and so forth; and
Fig. 24 is a diagram illustrating the relation between a tensile force acting on the webbing and the amount of the webbing pulled out.

### BEST MODE FOR CARRYING OUT THE INVENTION

The preferred embodiment of the seatbelt retractor according to the present invention will be described in detail with reference to the accompanying drawings.

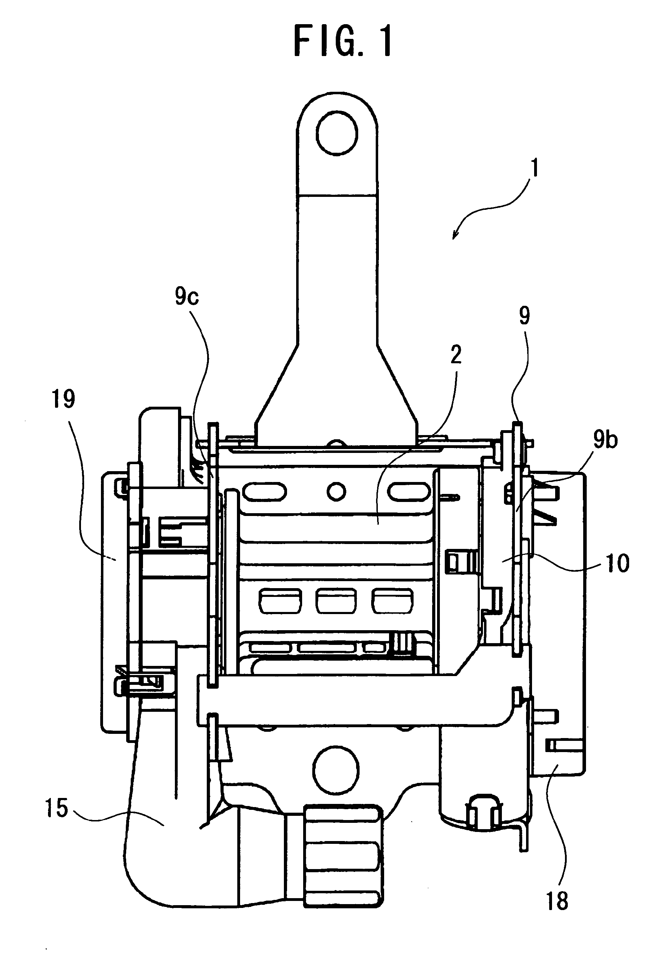

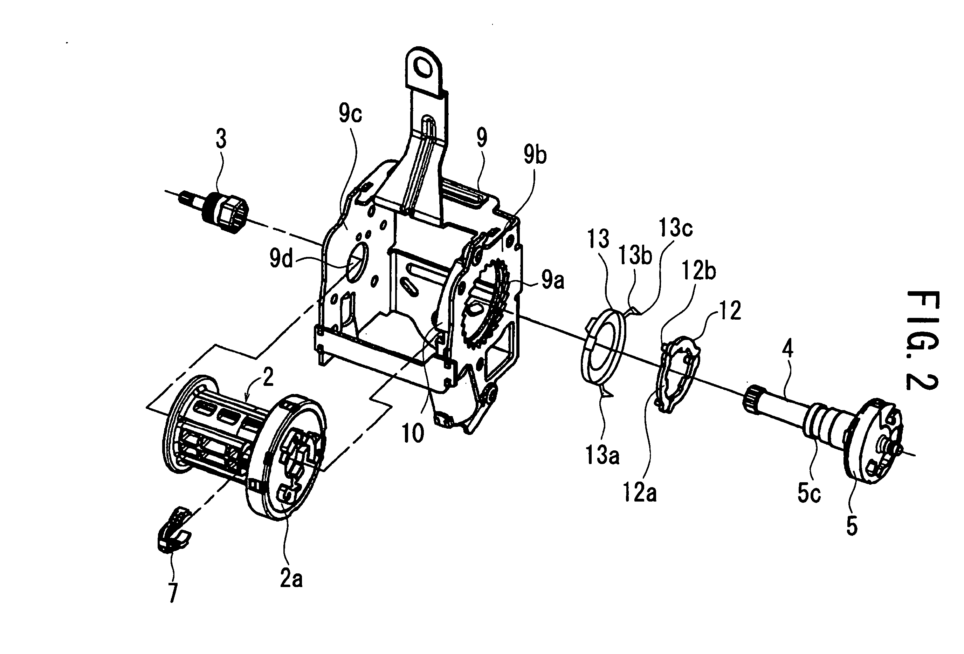

Fig. 1 is a front view of the whole seatbelt retractor according to the invention, and Fig. 2 is an exploded perspective view explaining the assembling of a take-up drum 2, a connector 3, a housing 9, a torsion bar 4, a locking base 5, a base stopper 7, and so forth which constitute the major part of the seatbelt retractor illustrated in Fig. 1.

In Fig. 2, the seatbelt retractor is provided with the substantially cylindrical take-up drum 2 on which webbing is wound. The torsion bar 4 is inserted through the center of the take-up drum 2, and one end of the torsion bar 4 is coupled integrally with one end of the take-up drum 2 by means of the connector 3, described later, and it is supported by a pair of side plates (9b, 9c) to freely rotate. A spiral spring 19 (Fig. 1) is mounted on the side plate 9c, which constantly biases the take-up drum 2 to rotate in the take-up direction of the webbing, and the torsion bar 4 is biased to rotate in the take-up direction of the webbing.

Here, the seatbelt retractor in this embodiment has the structure which winds up slackness in the webbing by a gas pressure, and so forth in case of a vehicle emergency such as a collision, and restrains the movements of vehicle occupant by a pretensioner 15 (Fig. 1) furnished on the side plate 9c.

The locking base 5 resembling a substantially disk-like shape is coupled integrally with the other end outside of the torsion bar 4 on the side of the side plate 9b of the housing, and it constitutes an emergency lock mechanism which restrains a rotation in the direction of the webbing pulled out.

A clutch mechanism, described later, is located near the other end of the torsion bar 4, while a second energy-absorbing means, described later, is located on the other end of the torsion bar 4, close to the side on the other end of the take-up drum 2, wherein the torsion bar 4 (first energy-absorbing means) and the second energy-absorbing means perform the absorption of impact energy in case of a vehicle emergency.

The housing 9 is made from a metal plate by a press-molding in a manner the right and left side plates (9b, 9c) rise up from both the sides of a back-plate fixed to the vehicle body, and the section of the housing forms a substantially U-letter.

The base stopper 7 is to prevent the locking base 5 from coming off from the take-up drum 2.

### First Energy-absorbing Means

Next, the first energy-absorbing means will be described.

As shown in Fig. 2, the one end of the torsion bar 4 is engaged with a hole of the connector 3 having the same shape thereof, and the other end is coupled with the locking base 5 to be able to rotate integrally.

The connector 3 is supported to freely rotate with the opening 9d bored on the side plate 9c of the housing 9, and it is also engaged with a hexagonal engagement recess being formed on the one end of the take-up drum 2 to correspond with the external shape of the connector 3, whereby the torsion bar 4 is capable of rotating integrally with the take-up drum 2.

Therefore, even if the emergency lock mechanism actuates the operation and the other end of the torsion bar 4 is fixed, the one end of the torsion bar 4 will rotate integrally with the take-up drum 2 by the webbing being pulled out. That is, the torsion bar 4 is twisted by the rotational force of the take-up drum 2, thus the energy of pulling out the webbing can be absorbed by the torsion resistance thereof.

In this manner, the torsion bar 4 functions as the first energy-absorbing means.

### Second Energy-absorbing Means

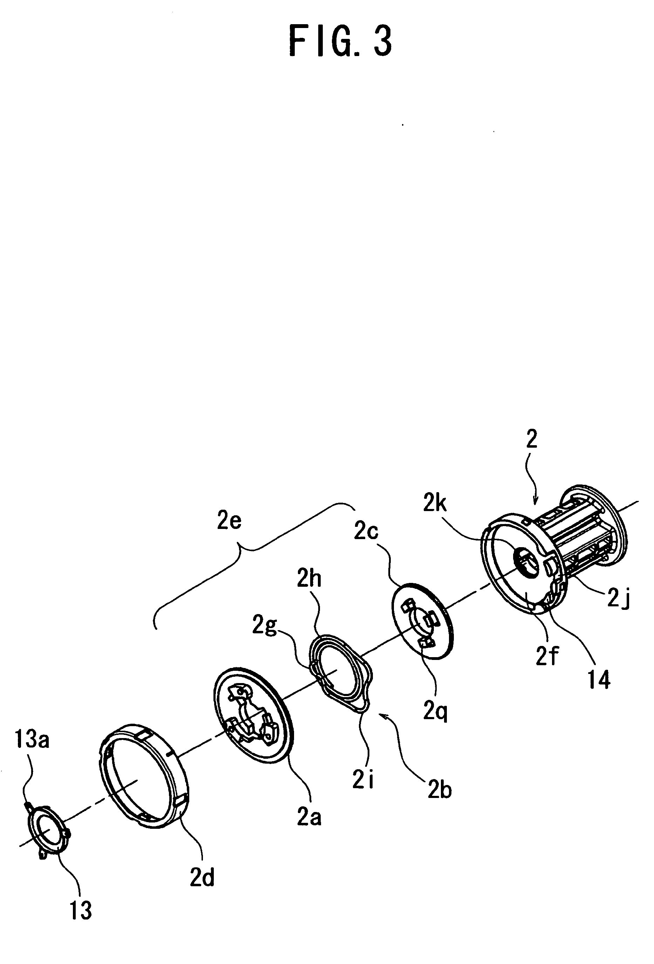

Next, the second energy-absorbing means will be described with reference to Fig. 3 through Fig. 6.

Fig. 3 is an exploded perspective view explaining the assembling of a plate assembly 2e. The plate assembly 2e comprises a plate body 2a, a spiral wire 2b with plural winds, and a disk member 2c having plural projections 2q located circumferentially around a center hole.

In Fig. 3, one end 2g of the wire is fixed to the plate body 2a, and the other end 2h of the wire is suspended to the backside of the disk member 2c (viewed from Fig. 3).

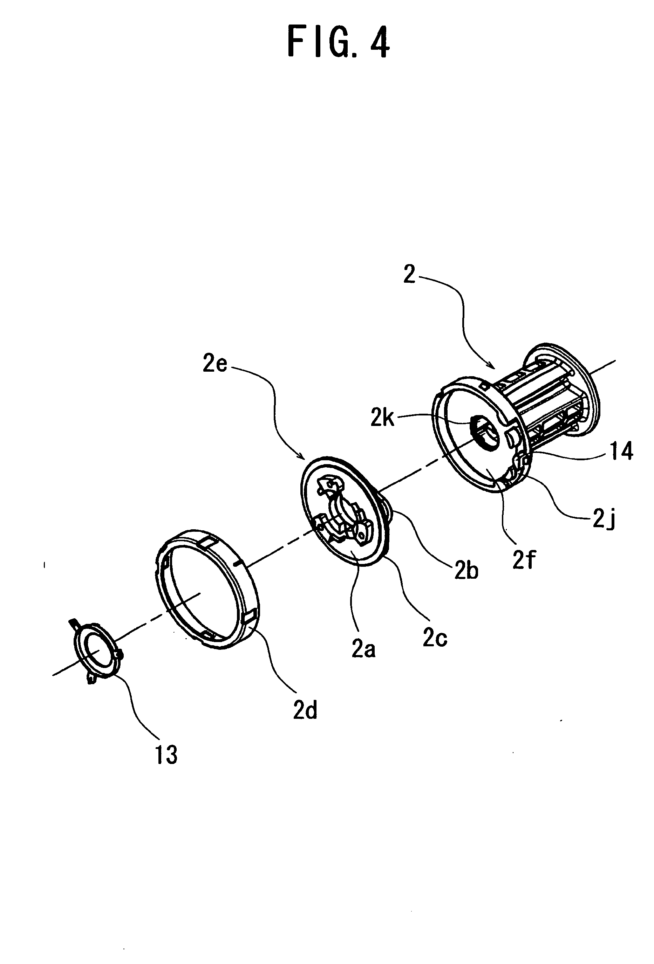

Fig. 4 is an exploded perspective view illustrating the whole of the second energy-absorbing means. The plate assembly 2e and the take-up drum 2 are attached with a retainer 2d.

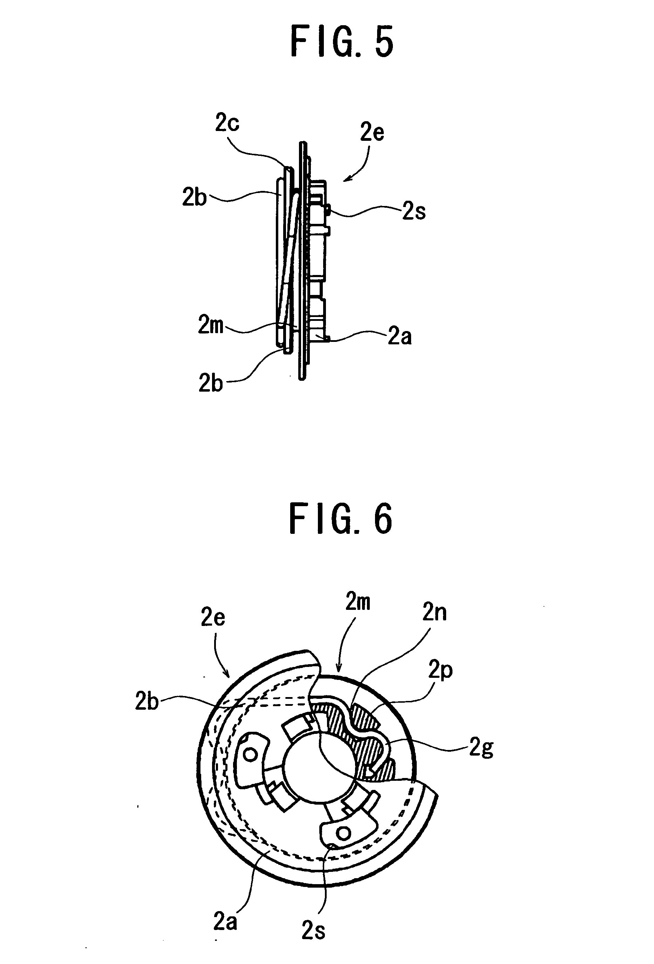

Fig. 5 is a side view of the plate assembly 2e, and Fig. 6 is a front view partly in section of the same, wherein the plate assembly 2e is assembled with the plate body 2a, the wire 2b, and the disk member 2c, as illustrated in Fig.3.

In Fig. 4, a substantially circular receiving recess 2f which constitutes a part of the second energy-absorbing means is formed on the side where the locking base is mounted on the take-up drum 2, namely, on the end face of the left side in the drawing. Further, an engagement hole 2k which receives a boss 5c (Fig. 2) of the locking base is formed on the center of the receiving recess 2f. The engagement pins 14 to be engaged with the wire 2b are formed at specified places on the periphery of the receiving recess 2f positioned outside the engagement hole 2k on the bottom face. And, the slopes 2t (Fig. 5) are formed at the specified places for engaging with the wire 2b. In this case, three semi-circular engagement pins 14 are formed integrally to project from the bottom face of the receiving recess 2f along the circumference thereof, wherein the wire 2b is formed in spiral, and the circumference 2i thereof (Fig. 3) is formed in curvature, which conforms to the circular sliding face of the engagement pins 14.

Fig. 5 is a side view of the plate assembly 2e in which the individual components illustrated in Fig. 3 are assembled. As illustrated in the drawing, the disk member 2c and the plate body 2a are engaged integrally with each other in a state where the spiral wire 2b is interposed between both. That is, the plate body 2a and the disk member 2c form a take-up part 2m with a distance approximately equivalent to the diameter of the wire 2b, and the disk member 2c is coupled with the plate body 2a in a manner that a relative rotation between both is impossible. At this moment, the curved one end 2g of the wire 2b is placed and fixed in a curved groove 2n (Fig. 6) of the plate body 2a.

Thus, the wire 2b having the one end thereof fixed to the plate body 2a passes through the gap between the plate body 2a and the disk member 2c, and when the take-up drum 2 and the plate assembly 2e perform a relative rotation, the wire 2b reaches the upper face of the plate body 2a being the take-up part 2m.

The disk member 2c covers take-up part 2m of the plate body 2a and the one end 2g of the wire 2b in the assembly state.

Fig. 6 is a front view which shows the internal structure of the plate assembly 2e, part of which is sectioned. As illustrated in the drawing, the curved groove 2n is formed on the take-up part 2m of the plate body 2a by means of substantially semi-circular plural projections 2p, and the one end 2g of the wire 2b is placed in the curved groove 2n and is coupled therewith. The curvature radius of the curved groove 2n is formed smaller than that of the curved path 2j (Fig. 4) of the take-up drum 2.

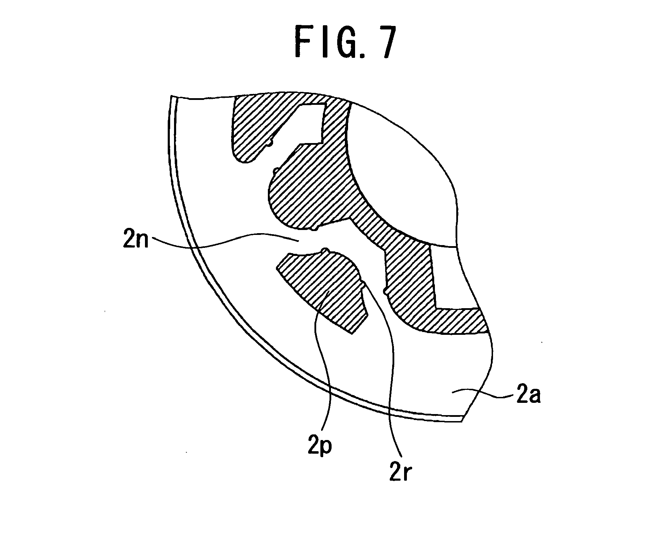

Fig. 7 illustrates another embodiment of the curved groove 2n. In the plural projections 2p of the plate body 2a, at least one set of ribs 2r facing to each other are formed between the projections 2p forming the curved groove 2n, and the gap between the ribs 2r is made narrower than the diameter of the wire 2b.

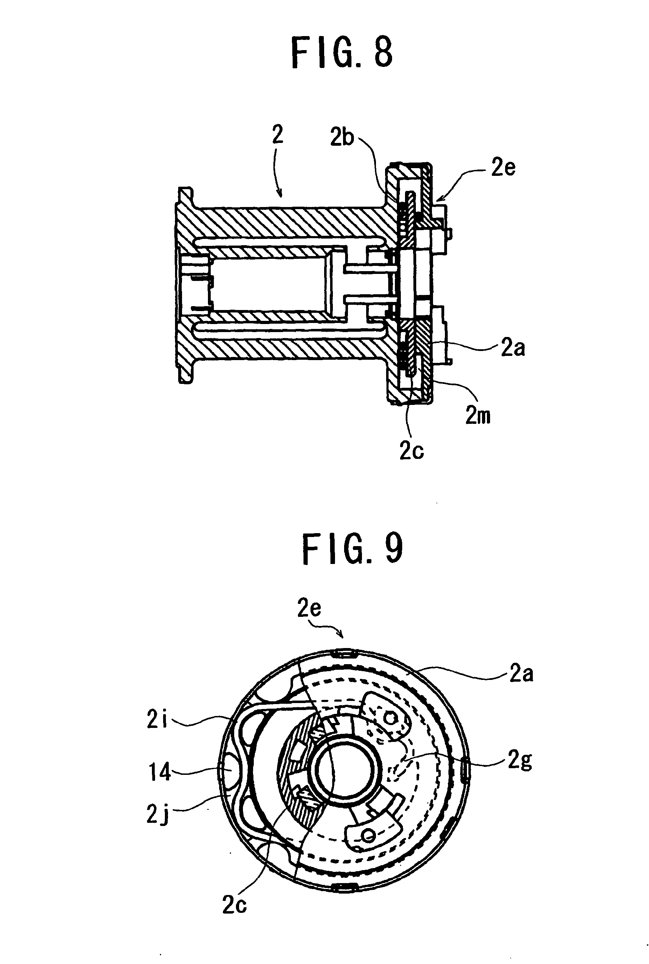

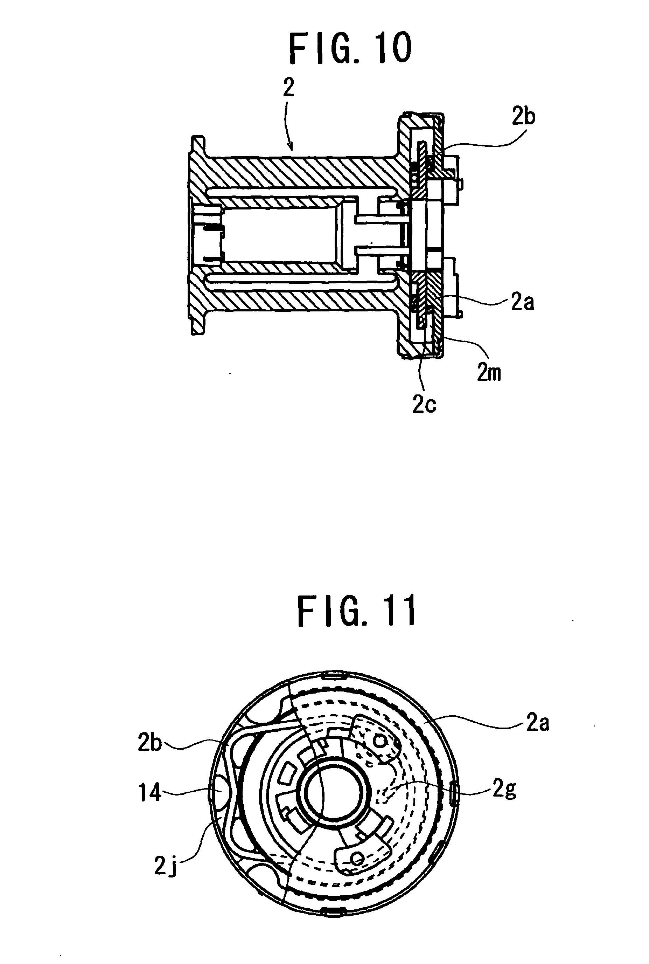

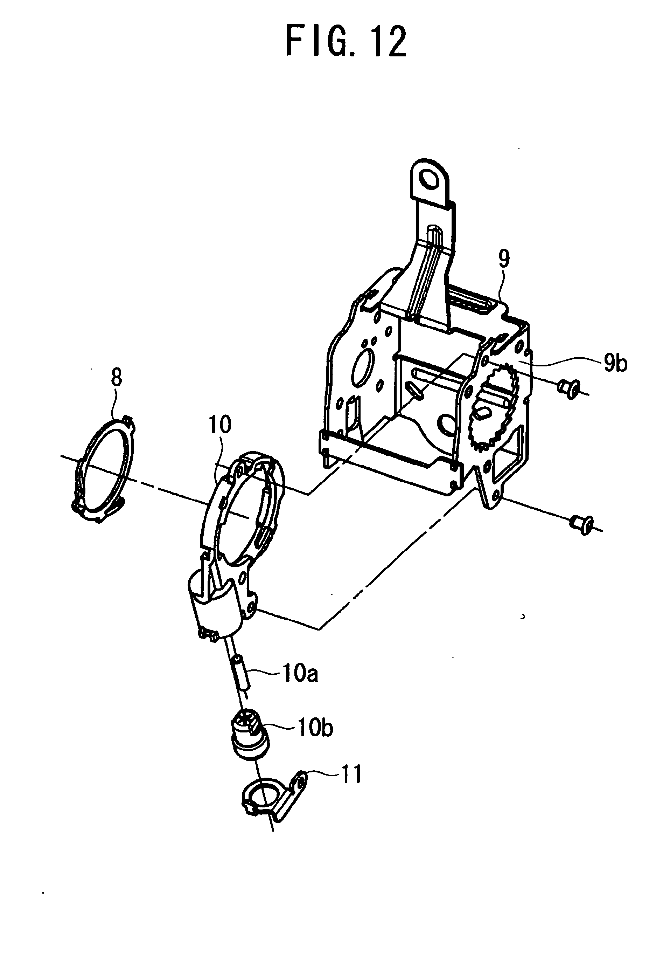

Fig. 8 is a front view in section illustrating a state where the take-up drum 2 illustrated in Fig. 4 and the plate assembly 2e are assembled, and Fig. 9 is a partly cutaway side view of the assembly illustrated in Fig. 8. Fig. 10 is a front view in section, illustrating a state where the take-up drum 2 rotates to a certain degree after the emergency lock mechanism actuates the operation in the assembly illustrated in Fig. 8, and Fig. 11 is a partly cutaway side view in the same state.

The second energy-absorbing means having the above construction is contained in a space delimited between the take-up drum 2 and the locking base 5. After the emergency lock mechanism actuates the operation, as the take-up drum 2 rotates, the wire 2b illustrated in Fig. 8 and Fig. 9 is wound into the take-up part 2m, as illustrated in Fig. 10 and Fig. 11.

At this moment, the wire 2b relatively moves between the disk member 2c and the plate body 2a, along the curved circumference 2i projected from the circumferential face of the disk member 2c, while sliding on the three semi-circular engagement pins 14 of the take-up drum 2.

When the emergency lock mechanism actuates the operation, in case of a vehicle emergency such as a collision, the locking base 5 coupled with the other end of the torsion bar 4 is blocked in rotating in the direction of the webbing pulled out. And, when a rotational torque more than a predetermined value acts on the take-up drum 2, due to the load acting on the webbing, the one end of the torsion bar 4 (first energy-absorbing means) actuates a torsional deformation.

Thereby, the take-up drum 2 rotates to a degree corresponding to the torsional deformation in the torsion bar 4, and at the same time, the other end of the torsion bar 4, which is fixed, rotates in the direction of the webbing pulled out, whereby the impact energy is absorbed. And, the actuation of the torsional deformation in the torsion bar 4 generates a relative rotation between the take-up drum 2 and the locking base 5. The absorption of the impact energy by the second energy-absorbing means actuates based on this relative rotation.

While the take-up drum 2 rotates relative to the locking base 5, the plate body 2a to which the one end 2g of the wire 2b is fixed is coupled with the locking base 5, and it does not rotate, while since the engagement pins 14 formed integrally with the take-up drum 2 turn, the wire 2b is pulled between the engagement pins 14. That is, the wire 2b slides between the engagement pins 14 while being positioned by the slopes 2t, while being sequentially pulled to meander between the engagement pins 14. At this moment, there generate a high sliding resistance and a bending resistance in the wire 2b, and hence the sliding resistance and the bending resistance absorb the impact energy.

That is, when the emergency lock mechanism actuates the operation in case of a vehicle emergency, and the load acting on the take-up drum 2 in the direction of the webbing pulled out is increased more than a predetermined value, both the torsion bar 4 (first energy-absorbing means) and the second energy-absorbing means operate as the energy-absorbing mechanism, and absorb the impact energy in case of a vehicle emergency.

### Clutch Mechanism

Next, the clutch mechanism will be described which releases the engagement of the plate body 2a with the locking base 5 of the emergency lock mechanism, and puts the plate body 2a from the state of a relative rotation with the take-up drum 2 being possible into the state of a united rotation with the take-up drum 2 being possible with the locking base 5 detached.

This clutch mechanism switches the first state where a relative rotation of the plate body 2a with the other end of the torsion bar 4 is impossible into the second state where a relative rotation of the plate body 2a with the other end of the torsion bar 4 is possible. It also comprises the clutch release mechanism which actuates the switching at an arbitrary timing after detecting a vehicle collision.

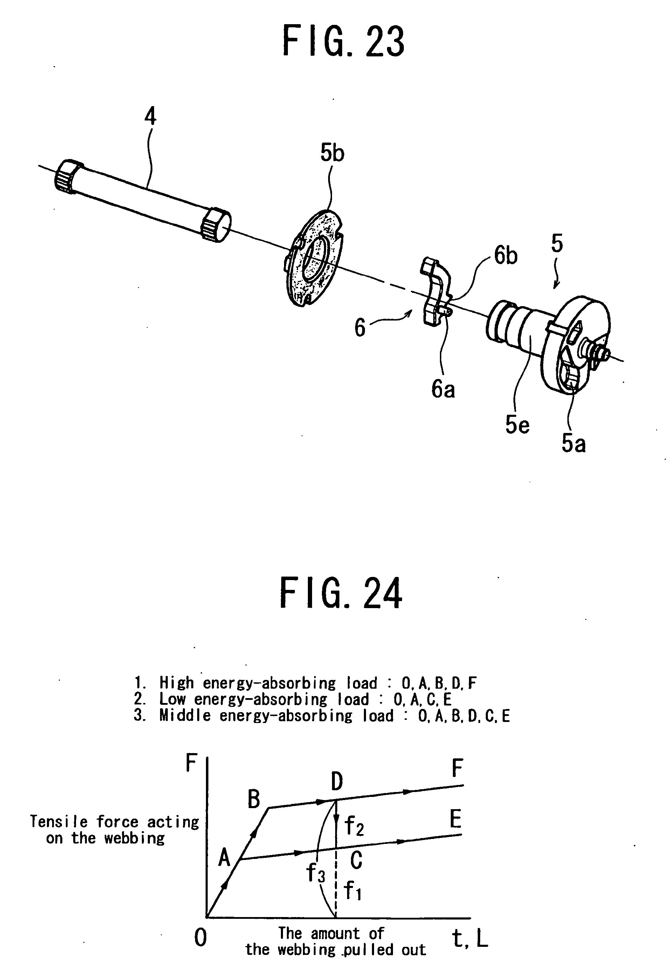

The clutch mechanism comprises, as shown in Fig. 2, a joint plate 5b (Fig. 23) coupled with the emergency lock mechanism in a manner that a relative rotation is impossible, and three joint pawls 12 being pivoted to be turnable on the opposite side of the take-up drum 2 to the plate body 2a, which are in face contact with the joint plate 5b to turn outward.

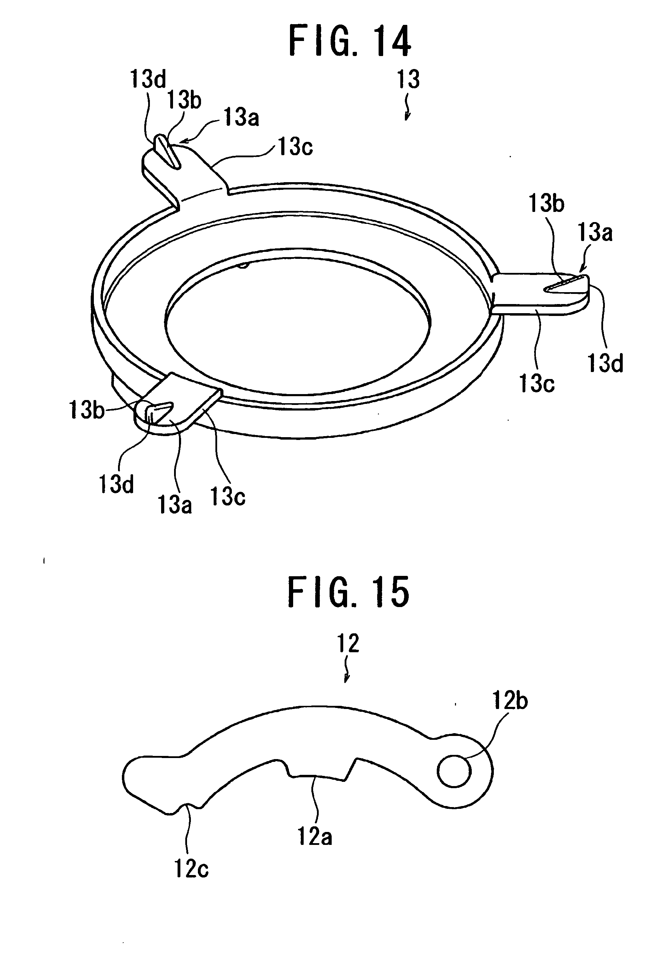

The joint pawl 12 (Fig. 15) is a bow-formed member, and a pin 12b is formed on the one end thereof. The pin 12b is pivoted on the opposite side of the take-up drum 2 to the plate body 2a. The joint pawl 12 turns with the pin 12b as the center. Further, the joint pawl 12 has an inner projection 12a (Fig. 15) formed on the center of the inner wall, and a notch 12c (Fig. 15) formed on the other end inside.

A pawl holder 13 (resin spring) (Fig. 14) in a sectional concave and circular form is provided in order to position and support the joint pawls 12. The pawl holder 13 is provided, on the circumference thereof in correspondence with the positions of the joint pawls 12, with nail-formed parts 13c each having ribs 13a formed thereon. Inwardly slant slopes 13b formed on the ribs 13a and the nail-formed parts 13c come into contact with the outer faces of the joint pawls 12. This contact and the resin spring functions to bias the joint pawls 12 continuously toward the axial center.

Meanwhile, as the joint pawls 12 turn outward against the elasticity of the resin spring and climb over the ribs 13a of the pawl holder 13, the pawl holder 13 is released from being pressed, the nail-formed parts 13c return to the insides of the joint pawls 12, and rib backsides 13d of the pawl holder 13 come into contact with notches 12c of the joint pawls 12. On the other hand, since the plate body 2a is provided with projections 2s which restrain the joint pawls 12 from turning relative to the plate body 2a immediately after the joint pawls 12 climb over the ribs 13a of the pawl holder 13, the joint pawls 12 are clamped by the rib backsides 13d of the pawl holder and the projections 2s of the plate body so that the joint pawls 12 are prevented from turning to the plate body 2a.

Therefore, after the clutch is detached once, the clutch will not operate again.

### Clutch Release Mechanism

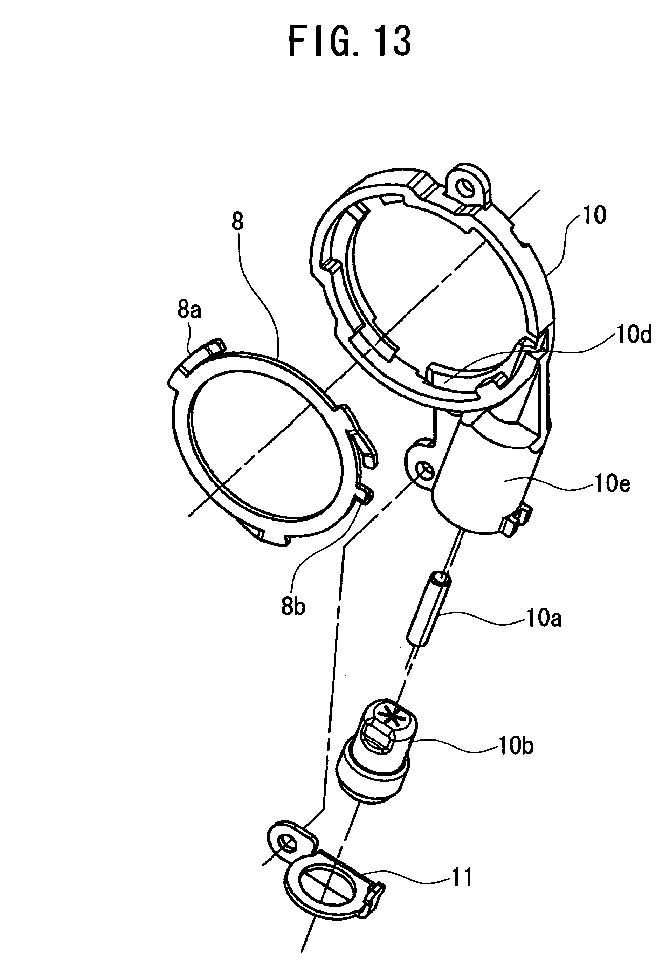

Fig. 12 is an exploded perspective view explaining the assembling of a release ring 8, the housing 9, a casing 10, and so forth being the components for releasing the clutch. Fig. 14 is an enlarged exploded perspective view of the release ring 8, the casing 10, a piston 10a, a gas generator 10b, a gas generator holder 11, and so forth, which are illustrated in Fig. 13.

The clutch release mechanism will be described with reference to Fig. 12 and Fig. 13. The release ring 8 is mounted to be rotatable on the casing 10 fixed to the side plate 9b of the housing on the other side of the torsion bar 4 (Fig. 2), which is located on the circumferences of the joint pawls 12.

As illustrated in Fig. 12 and Fig. 13, the clutch release mechanism is made up with the casing 10, the gas generator 10b which generates gas in a cylinder 10e at an arbitrary timing after detecting a vehicle collision, and the piston 10a, which is pressed and driven by the gas pressure in the cylinder, and presses the circumference of the release ring 8 to rotate the release ring 8. The gas generator 10b is attached to the casing 10 by the gas generator holder 11.

The release ring 8 is provided with a contact 8b which comes in contact with the piston 10a, and three tapered parts 8a located with a uniform spacing on the circumference thereof. On the other hand, the casing 10 which holds the release ring 8 is provided with tapered projections 10d corresponding to the tapered parts 8a of the release ring 8 rotated.

In the operation, the piston 10a pressed and driven by the gas pressure comes in contact with the contact 8b formed on the circumference of the release ring 8, and hence the release ring 8 rotates. Thereby, the tapered parts 8a of the release ring 8 are guided by the tapered projections 10d of the casing, and the release ring 8 retreats toward the take-up drum 2 (Fig. 2) and retreats from the circumferences of the joint pawls 12 (Fig. 2).

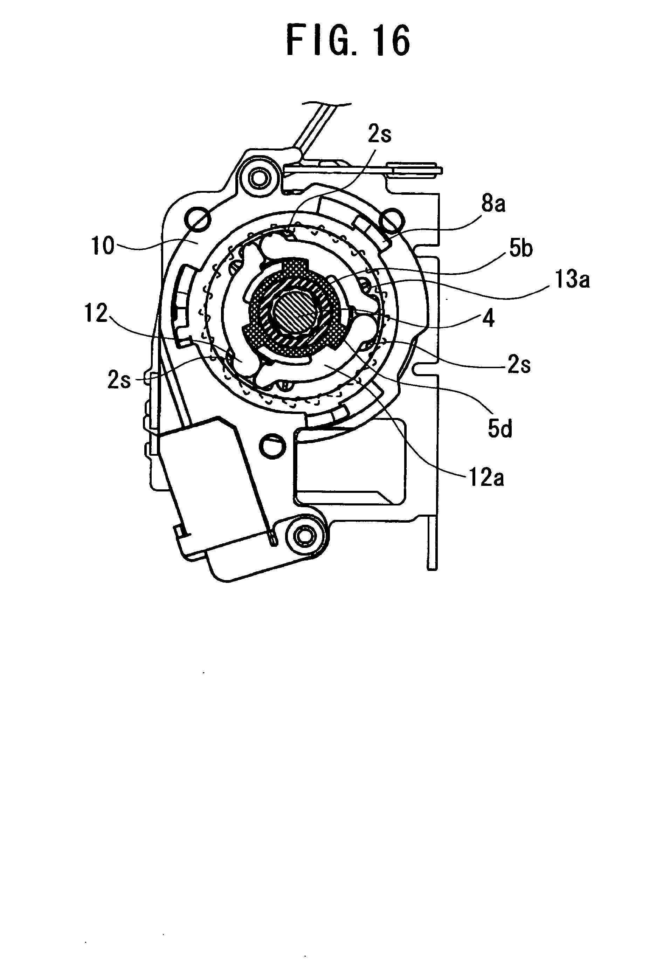

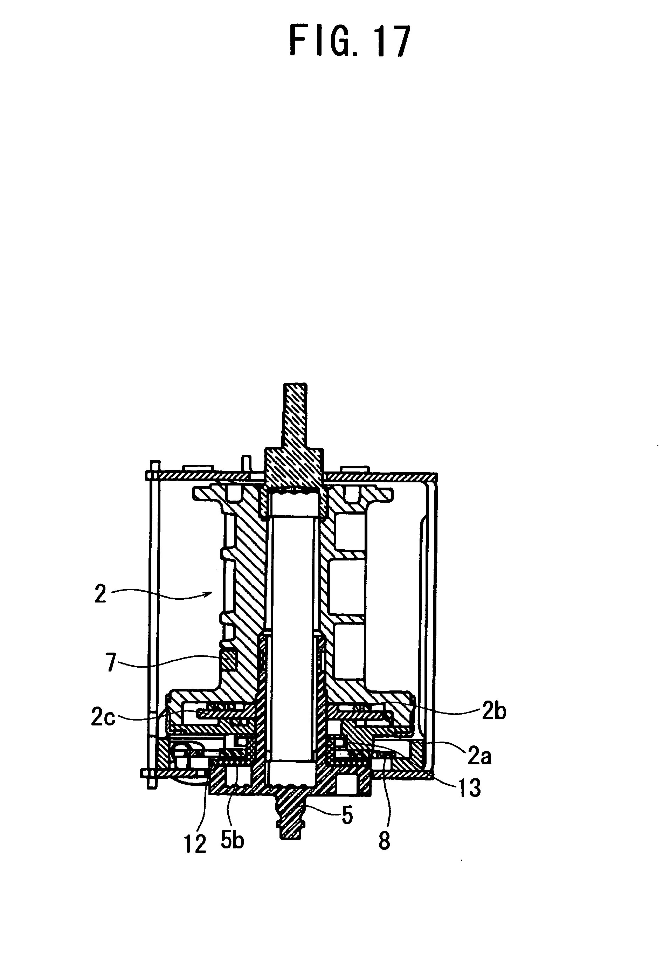

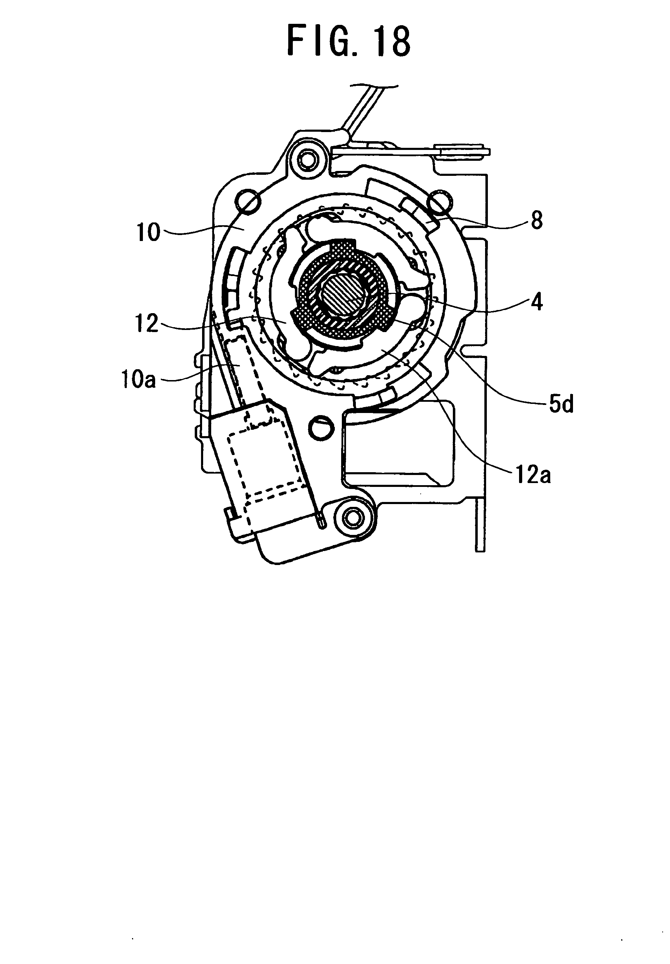

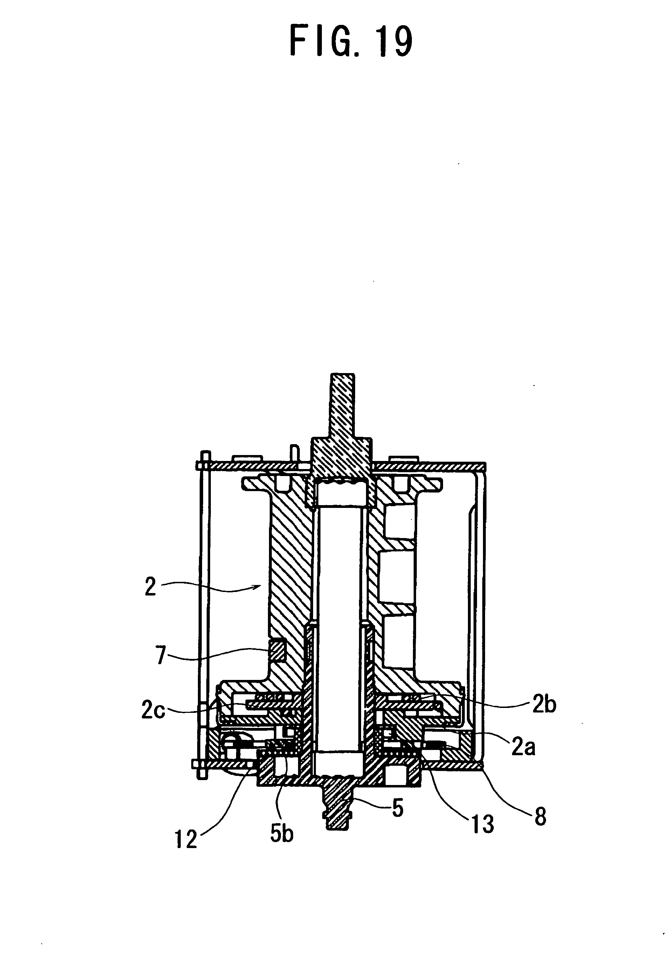

Next, the operation of the clutch mechanism will be described based on Fig. 16 through Fig. 21.

Fig. 16 through Fig. 21 are partly cutaway side views and plan views in section, which explain the operation of the clutch mechanism.

In Fig. 16 through Fig. 21, as already described, the clutch mechanism switches the first state where a relative rotation of the plate body 2a with the other end of the torsion bar 4 is impossible into the second state where a relative rotation of the plate body 2a with the other end of the torsion bar 4 is possible.

In the assembly state, the joint pawls 12 are biased toward the axial center by the slopes 13b (Fig. 14) formed on the ribs 13a of the pawl holder 13. The three joint pawls 12 are fixed at the most inwardly convergent position, in non-contact with the inner circumference of the release ring 8, and the inner projections 12a of the joint pawls 12 are in contact with projections 5d of the joint plate 5b.

Here, as the emergency lock mechanism actuates the operation, an engagement tooth 6b of a lock pawl 6 (Fig. 23) engages with the lock teeth 9a (Fig. 2) formed on the side plate 9b of the housing, thus generating a relative rotation between the joint plate 5b and the plate body 2a which will continue to rotate. At this moment, a relative rotation is generated between the joint pawls 12 and the projections 5d of the joint plate, whereby the projections 5d of the joint plate press the inner projections 12a of the joint pawls 12, so that the joint pawls 12 receive a force toward the circumference, and they are prone to expand outwardly.

When the force exceeds the biasing force of the pawl holder 13, the joint pawls 12 come in contact with the inner-circumferential wall of the release ring 8. When the joint pawls 12 come in contact with the inner-circumferential wall of the release ring 8 and the outward expansion thereof is restrained, the locking base 5 and the plate body 2a become integrated with each other, and a relative rotation is generated between the take-up drum 2 and the plate body 2a, so that the wire 2b is pulled and the second energy absorption is performed, in addition to the energy absorption by the torsion bar 4.

Next, as the clutch release mechanism actuates the operation in this state, the piston 10a (Fig. 13) operates to rotate the release ring 8, whereby the rotation of the release ring 8 guides the tapered parts 8a of the release ring 8 to the tapered projections 10d of the casing (Fig. 13). Thus, the release ring 8 retreats toward the take-up drum 2, and retreats from the circumferences of the joint pawls 12 at the same time. The joint pawls 12 come in face contact with the joint plate 5b to expand outwardly, and become detached from the projections 5d of the joint plate, whereby the plate body 2a is released from the locking base 5.

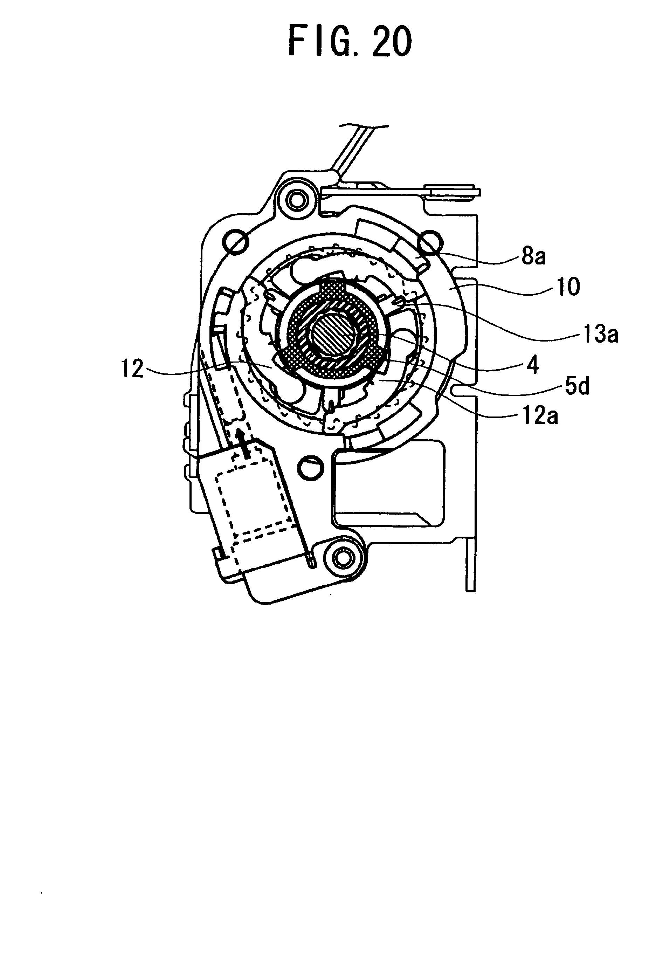

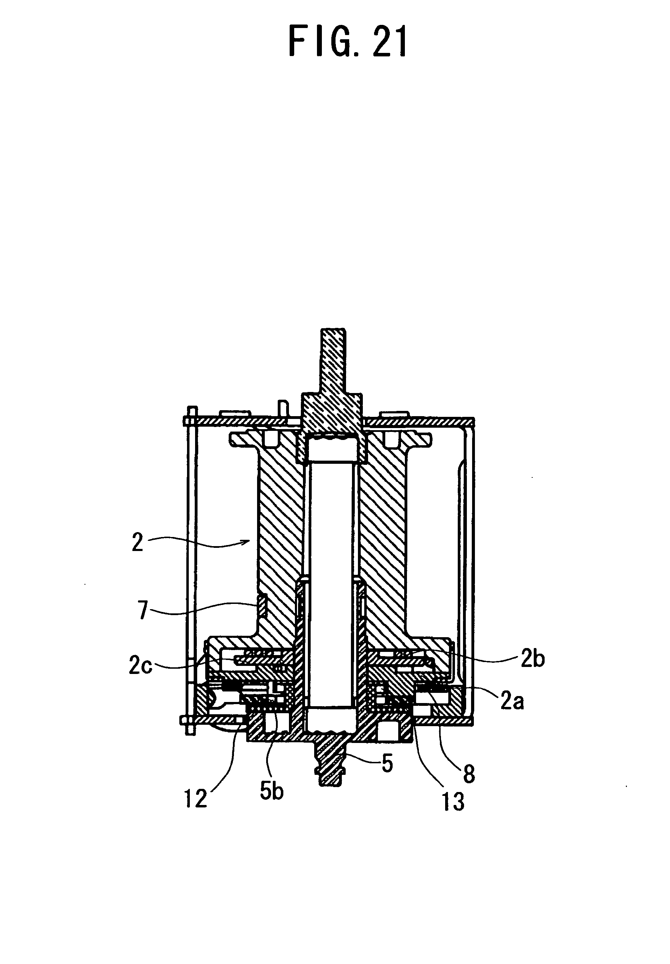

That is, as the clutch mechanism actuates the operation to move the release ring 8 in the axial direction, as illustrated in Fig. 20 and Fig. 21, the joint pawls 12 expand outward, and the projections 5d of the joint plate are completely detached from the joint pawls 12, and hence the locked state where the locking base 5 and the plate body 2a are integrally fixed is released. In consequence, the pull-out motion of the wire 2b is halted, and the plate body 2a and the take-up drum 2 become rotatable integrally. However, since the take-up drum 2 and the locking base 5 continue a relative rotation even in this case, the torsion bar 4 alone continues the energy absorption.

### Emergency Lock Mechanism

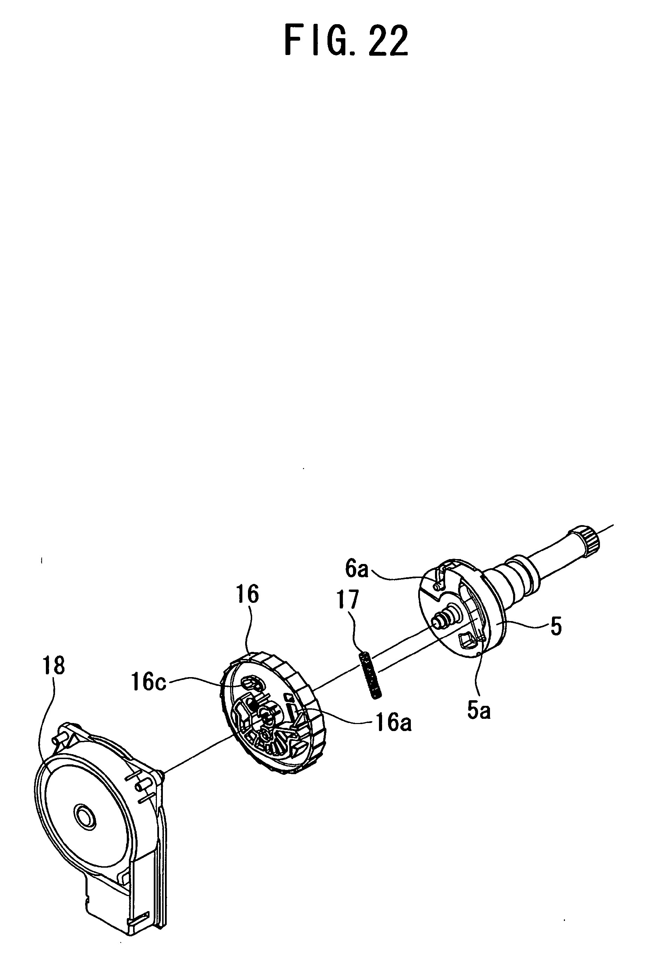

Fig. 22 is an exploded perspective view explaining the assembling of the emergency lock mechanism, which is made up with the locking base 5, a lock clutch 16, a cover 18, and so forth. Fig. 23 is an exploded perspective view explaining the assembling of the torsion bar 4, the lock pawl 6, the locking base 5, and so forth.

As a concrete construction of the emergency lock mechanism, various known ones may be adopted. As one example, as illustrated in Fig. 22 and Fig. 23, a spring receiving part 16a is formed to project on one side of the lock clutch 16, and the spring receiving part 16a is engaged to be relatively movable with a play inside a spring containing part 5a resembling a recessed-groove shape, which is formed on the locking base 5.

At this moment, the spring receiving part 16a is elastically biased in a specified direction by a return spring 17 made of a coil spring retained in the spring containing part 5a, and the lock clutch 16 is made to rotate synchronously with the locking base 5 in a state of being biased in the direction of the webbing pulled out.

The torsion bar 4 is inserted in a hole bored through the cylindrical boss 5c, which is formed to project from the side of the locking base 5 in the direction of facing the take-up drum 2, whereby, the torsion bar 4 is coupled with the locking base 5 to be rotatable integrally.

The lock clutch 16 has a projected guide groove 16c formed thereon, and into the guide groove 16c, an interlocking pin 6a formed on the lock pawl 6 (Fig. 23) is slid and guided. The interlocking pin 6a is made to be slid and guided into the projected guide groove 16c by a relative rotation of the lock clutch 16 and the locking base 5 against the biasing force by the return spring 17. This sliding and guiding of the interlocking pin 6a makes it possible to freely project or retreat the engagement tooth 6b of the lock pawl 6 from the circumference of the locking base 5.

The emergency lock mechanism is made up with the locking base 5, the lock pawl 6, the lock teeth 9a (Fig. 2) formed on the housing 9, the lock clutch 16, and so forth.

In order to actuate the emergency lock mechanism, a cover 18 is provided with a lock actuating mechanism which actuates the emergency lock mechanism in response to an abrupt pull-out of the webbing and an abrupt variation in the acceleration.

The locking base 5 and the lock pawl 6 are attached with the joint plate 5b.

The engagement tooth 6b is formed on a tip of the lock pawl 6, and the lock pawl 6 is located to be slidable on the locking base 5 by the interlocking pin 6a. The lock teeth 9a with which the engagement tooth 6b of the lock pawl 6 is able to engage are formed on the side plate 9b of the housing 9, and in case of a vehicle emergency, the engagement tooth 6b of the lock pawl 6 is engaged with the lock teeth 9a, and this engagement restrains the locking base 5 from rotating in the direction of the webbing pulled out.

According to the invention thus described, since the second energy-absorbing means is contained in a space delimited by the take-up drum 2 and the locking base 5, there is not a substantial size expansion in the axial direction of the seatbelt retractor to sacrifice the compactification, although the second energy-absorbing means is provided separately from the torsion bar 4. Further, the structures of the wire 2b and the engagement pins 14 which constitute the second energy-absorbing means are equally simple, and the manufacturing process thereof is rather simple as well.

Fig. 24 is a diagram illustrating the relation between a tensile force acting on the webbing and the amount of the webbing pulled out.

The whole energy-absorbing load of the seatbelt retractor is the sum f3 of an energy-absorbing load f1 when the torsion bar 4 generates a torsional deformation and an energy-absorbing load f2 by the second energy-absorbing means, as illustrated in Fig. 24.

In case of a high energy-absorbing load, the relation between both forms a curve O, A, B, D, F in case of a low energy-absorbing load, it forms a curve O, A, C, E by the switching by the clutch mechanism, and, in case of a medium energy-absorbing load, it forms a curve O, A, B, D, C, E.

Further, with regard to the area of the energy absorption by the torsional deformation in the torsion bar 4, the area of the energy absorption by the sliding resistance of the second energy-absorbing means can be set freely independently.

For example, the area of the energy absorption by the second energy-absorbing means can be set to overlap a part of the area of the energy absorption by the torsional deformation in the torsion bar 4, thereby securing a high energy-absorbing load equivalent to the sum of both the energy-absorbing loads, in the part of the area of the energy absorption by the torsional deformation in the torsion bar 4. In the area where both the energy-absorbing areas do not overlap each other, a low energy-absorbing load can be set only by the energy-absorbing function by the torsional deformation in the torsion bar 4. Thus, it is possible to provide the energy-absorbing mechanism of the seatbelt retractor with such an energy-absorbing characteristic in which the energy-absorbing load varies during the operation.

Further, the adjustment of the whole energy-absorbing load of the seatbelt retractor is related to various factors such that it is related not only to the modifications of the diameter and material of the torsion bar 4, but also to the modifications of the size, shape, and material of the second energy-absorbing means. For example, it is possible to realize a desired energy-absorbing load, not depending on the modifications such as expansion of the diameter of the torsion bar 4 and modification of the material thereof, but by means of the design modification of the other remaining factors. That is, it is possible to easily set the energy-absorbing load high, without sacrificing the compactification of the seatbelt retractor by reducing the diameters of the torsion bar 4 and the take-up drum 2. And, in case that the size and the material of both the torsion bar 4 and the second energy-absorbing means can be modified, by adjusting the energy-absorbing load and adjusting the energy-absorbing area in both the means, it becomes possible to easily meet the demand for a specific energy characteristic based on differences of the vehicle structure, and also possible to flexibly meet various needs.

Meanwhile, it is preferable to set the adjustment of the sliding resistance between the wire 2b and the engagement pins 14 based on various factors such as a shape of the curved path, roughness of the contact faces of both, and size of the contact area and so forth. When the adjustment of the sliding resistance is set based on various factors in this manner, for example, if a modification of part of the factors becomes difficult due to the restrictions of the dimensions, modifying the other factors will make it possible to adjust the sliding resistance comparably easily to an arbitrary value required.

The seatbelt retractor of the invention is provided with the torsion bar 4 and the second energy-absorbing means, and also employs the clutch mechanism. Thereby, it is possible to appropriately select the amount of the energy absorption, by actuating both or only the torsion bar 4 at the actuating time of the energy absorption. And, after actuating the energy absorption by using both, in order to achieve an optimum energy absorption in correspondence with parameters such as physical make-up of vehicle occupant, scale of a vehicle collision, and time, it is possible to stop the provision of load by the second energy-absorbing means on the way, and to perform the energy absorption only by the torsion bar.

### INDUSTRIAL APPLICABILITY

The present invention is useful for a seatbelt retractor which absorbs an impact load acting on a vehicle occupant in case of a vehicle emergency such as a collision, and secures the vehicle occupant.

## Claims

1. A seatbelt retractor (1) comprises:
a take-up drum (2) on which webbing is wound;
a take-up shaft (4), one end of which is coupled with one end of the take-up drum in a manner that a relative rotation with the take-up drum is impossible, which is biased in the direction of the webbing taken up;
an emergency lock mechanism (5, 6, 16, 18) which restrains a rotation in the direction of the webbing pulled out;
a clutch mechanism (5b, 12, 13) located near the other end of the take-up shaft;
a plate body (2a) provided close to a side on the other end of the take-up drum, which is provided on the other end of the take-up shaft through the clutch mechanism; and
an energy-absorbing means (2e, 2f, 2k, 14) located between the side of the take-up drum and the plate body, which provides a resistive load by mutually performing a relative rotation;
**characterized in that** the clutch mechanism switches a first state where the plate body is provided on the other end of the take-up shaft in a manner that a relative rotation with the take-up shaft is impossible into a second state where the plate body is provided on the other end of the take-up shaft in a manner that a relative rotation with the take-up shaft is possible, and the clutch mechanism includes a clutch release mechanism (8, 8a, 8b, 10a, 10b, 10d) which actuates a switching at an arbitrary timing.

2. A seatbelt retractor (1) according to claim 1, wherein
the take-up shaft (4) is a torsion bar inserted through the take-up drum (2);
the emergency lock mechanism is located on the other end of the torsion bar; and
the seatbelt retractor further comprising a lock actuating device which actuates the emergency lock mechanism in case of a vehicle emergency.

3. A seatbelt retractor (1) according to claim 2, wherein the clutch mechanism includes:
a joint plate (5b) coupled with the emergency lock mechanism in a manner that a relative rotation with the emergency lock mechanism is impossible;
at least one joint pawl (12) pivoted to be turnable to a side of the plate body on the opposite side to the take-up drum, which comes in contact with the joint plate to turn outwardly;
a release ring (8) retained by a casing fixed on a side plate of a housing on the other end of the torsion bar to be moveable in the axial direction while rotating, which is located on a periphery of the joint pawl; and
a clutch release mechanism which actuates the release ring attached to the casing (10).

4. A seatbelt retractor (1) according to claim 3, wherein the clutch release mechanism includes a gas generator (10b) which generates gas in a cylinder (10e) attached to the casing (10) at an arbitrary timing, and a piston (10a) pressed and driven by a gas pressure in the cylinder, which presses the circumference of the release ring (8) to rotate the release ring.

5. A seatbelt retractor (1) according to claim 4, wherein the release ring (8) is provided with a contact (8b) on the circumference thereof, which comes in contact with the piston (10a), and plural tapered parts (8a) located with a uniform spacing on the circumference thereof, and the casing (10) which holds the release ring is provided with projections (10d) corresponding to the tapered parts of the release ring.

6. A seatbelt retractor (1) according to any of the claims 1 to 5, wherein the clutch mechanism is provided with a pawl holder (13) which positions and supports the joint pawls (12), and the pawl holder is provided with ribs (13a) integrally formed thereon, which biases the joint pawls in the axial direction and will not return the joint pawls to the initial positions after operating the joint pawls.

7. A seatbelt retractor (1) according to any one of claims 2 to 6, wherein the energy-absorbing means includes a curved path (2j) provided on a side of the take-up drum (2) on the other end of the torsion bar (4), and a wire (2b), one end (2g) of which is fixed to a take-up part (2m) of the plate body (2a), a substantially medium part of which is located in the curved groove (2n).

## Patentansprüche

1. Sitzgurt-Retraktor (1) umfassend:
eine Aufnahmetrommel (2), um die ein Gurtband gewickelt ist;
eine Aufnahmewelle (4), deren eines Ende mit einem Ende der Aufnahmetrommel derart gekoppelt ist, daß eine relative Drehung mit der Aufnahmetrommel unmöglich ist, die in der Richtung des aufgenommenen Gurtbandes vorgespannt ist;
einen Notverriegelmechanismus (5, 6, 16, 18), der eine Drehung in der Richtung des herausgezogenen Gurtbandes verhindert;
ein Kupplungsmechanismus (5b, 12, 13), der in der Nähe des anderen Endes der Aufnahmewelle angeordnet ist;
einen Plattenkörper (2a), der in der Nähe einer Seite an dem anderen Ende der Aufnahmetrommel und an dem anderen Ende der Aufnahmewelle durch den Kupplungsmechanismus vorgesehen ist; und
eine Energieabsorbierungseinrichtung (2e, 2f, 2k, 14), die zwischen der Seite der Aufnahmetrommel und des Plattenkörpers angeordnet ist, welche Einrichtung eine Widerstandslast durch gegenseitiges Ausführen einer relativen Drehung bereitstellt;
**dadurchgekennzeichnet**,daß
der Kopplungsmechanismus von einem ersten Zustand, bei dem der Plattenkörper an dem anderen Ende der Aufnahmewelle vorgesehen ist, so daß eine relative Drehung mit der Aufnahmewelle unmöglich ist, in einen zweiten Zustand schaltet, bei dem der Plattenkörper an dem anderen Ende der Aufnahmewalze vorgesehen ist, so daß eine relative Drehung mit der Aufnahmewalze möglich ist, und der Kupplungsmechanismus einen Kupplungslösemechanismus (8, 8a, 8b, 10a, 10b, 10d) umfaßt, der ein Schalten zu einem beliebigen Zeitpunkt veranlaßt.

2. Sitzgurt-Retraktor nach Anspruch 1, bei dem die Aufnahmewelle (4) eine Torsionsstange ist, die durch die Aufnahmetrommel (2) hindurch eingesetzt ist; der Notverriegelmechanismus an dem anderen Ende der Torsionsstange angeordnet ist; und
der Sitzgurt-Retraktor außerdem eine Verriegelungsaktivierungseinrichtung umfaßt, die den Notverriegelmechanismus bei einem Fahrzeugunfall aktiviert.

3. Sitzgurt-Retraktor nach Anspruch 2, bei dem der Kupplungsmechanismus umfaßt:
eine Verbindungsplatte (5b), die mit dem Notverriegelmechanismus verbunden ist, so daß eine relative Drehung mit dem Notverriegelmechanismus unmöglich ist;
wenigstens eine Verbindungsklinke (12), die drehbar an einer Seite des Plattenkörpers auf der gegenüberliegenden Seite der Aufnahmetrommel angelenkt ist und die Verbindungsplatte berührt, um nach außen zu drehen;
einen Lösering (8), der durch eine Fassung gehalten ist, die an einer Seitenplatte eines Gehäuses an dem anderen Ende der Torsionsstange befestigt ist, um in der axialen Richtung bewegbar zu sein, wenn gedreht wird, und der an einem Umfang der Verbindungsklinke angeordnet ist; und
einen Kupplungslösemechanismus, der den Lösering betätigt, der an der Fassung (10) angebracht ist.

4. Sitzgurt-Retraktor nach Anspruch 3, bei dem der Kupplungslösemechanismus einen Gasgenerator (10b), der Gas in einen Zylinder (10e) zu einem willkürlichen Zeitpunkt erzeugt, der an der Fassung angebracht ist, und einen Kolben (10a) umfaßt, der von dem Gasdruck in dem Zylinder gedrückt und angetrieben wird, der den Umfang des Löserings (8) drückt, um den Lösering zu drehen.

5. Sitzgurt-Retraktor nach Anspruch 4, bei dem der Lösering (8) mit einem Kontakt (8b) an dessen Umfang, der den Kolben (10a) berührt, und mit mehreren konischen Teilen (8a) versehen ist, die in einem gleichen Abstand an dessen Umfang angeordnet sind, und die Fassung (10), die den Lösering hält, ist mit Vorsprüngen (10d) versehen, die den konischen Teilen des Löserings entsprechen.

6. Sitzgurt-Retraktor nach einem der Ansprüche 1 bis 5, bei dem der Kupplungsmechanismus mit einem Klinkenhalter (13) versehen ist, der die Verbindungsklinke (12) positioniert und trägt, und der Klinkenhalter mit Rippen (13a) versehen ist, die damit einstückig ausgebildet sind, was die Verbindungsklinken in der Axialrichtung vorspannt und die Verbindungsklinke nicht in die anfängliche Positionen zurückkehren läßt, nachdem die Verbindungsklinken betätigt sind.

7. Sitzgurt-Retraktor nach einem der Ansprüche 2 bis 6, bei dem die Energieabsorbierungseinrichtung eine gekrümmte Bahn (2j), die an einer Seite der Aufnahmetrommel (2) an dem anderen Ende der Torsionsstange (4) vorgesehen ist, und einen Draht (2b) umfaßt, dessen eines Ende an einer Aufnahme (2m) des Plattenkörpers (2a) befestigt ist, wobei das Mittelteil der Aufnahme in der gekrümmten Nut (2n) angeordnet ist.

## Revendications

1. Rétracteur (1) de ceinture de sécurité comprenant :
un tambour (2) d'enroulement sur lequel s'enroule la sangle ;
un arbre 4) d'enroulement, dont une extrémité est couplée avec une extrémité du tambour d'enroulement d'une manière telle qu'une rotation relative par rapport au tambour d'enroulement est impossible, qui est incliné dans la direction de l'enroulement de la sangle ;
un mécanisme (5, 6, 16, 18) de verrouillage d'urgence qui limite une rotation dans la direction de traction sur la sangle ;
un mécanisme (5b, 12, 13) d'embrayage situé près de l'autre extrémité de l'arbre d'enroulement ;
un corps (2a) de plaque placé près d'un côté sur l'autre extrémité du tambour d'enroulement, qui est placée sur l'autre extrémité de l'arbre d'enroulement par l'intermédiaire du mécanisme d'embrayage ; et un moyen (2e, 2f, 2k, 14) d'absorption d'énergie placé entre le côté du tambour d'enroulement et le corps de plaque, qui apporte une charge résistive par exécution mutuelle d'une rotation relative ;
**caractérisé en ce que** le mécanisme d'embrayage passe d'un premier état, dans lequel le corps de plaque est placé sur l'autre extrémité de l'arbre d'enroulement d'une manière telle qu'une rotation relative par rapport à l'arbre d'enroulement est impossible, à un deuxième état, dans lequel le corps de plaque est placé sur l'autre extrémité de l'arbre d'enroulement d'une manière telle qu'une rotation relative par rapport à l'arbre d'enroulement est possible, et le mécanisme d'embrayage inclut un mécanisme (8, 8a, 8b, 10a, 10b, 10d) de déclenchement de l'embrayage qui actionne un passage à un moment arbitraire.

2. Rétracteur (1) de ceinture de sécurité selon la revendication 1, dans lequel
l'arbre (4) d'enroulement est une barre de torsion insérée à travers le tambour (2) d'enroulement ;
le mécanisme de verrouillage d'urgence est placé sur l'autre extrémité de la barre de torsion ; et le rétracteur de ceinture de sécurité comprend en outre un dispositif d'actionnement du verrouillage qui actionne le mécanisme de verrouillage d'urgence dans le cas d'une urgence du véhicule.

3. Rétracteur (1) de ceinture de sécurité selon la revendication 2, dans lequel le mécanisme d'embrayage inclut :
une plaque (5b) de liaison couplée avec le mécanisme de verrouillage d'urgence d'une manière telle qu'une rotation relative par rapport au mécanisme de verrouillage d'urgence est impossible ;
au moins un cliquet (12) de liaison pivotant pouvant tourner vers un côté du corps de plaque sur le côté opposé au tambour d'enroulement, qui vient en contact avec la plaque de liaison pour tourner vers l'extérieur ;
une bague (8) de déclenchement maintenue par un boîtier fixé sur une plaque latérale d'un carter sur l'autre extrémité de la barre de torsion de manière à être mobile en direction axiale tout en tournant, qui est placée sur une périphérie du cliquet de liaison ; et
un mécanisme de déclenchement de l'embrayage qui actionne la bague de déclenchement fixée au boîtier 10).

4. Rétracteur (1) de ceinture de sécurité selon la revendication 3, dans lequel le mécanisme de déclenchement de l'embrayage inclut un générateur (10b) de gaz qui génère du gaz dans un cylindre (10e) fixé au boîtier (10) à un moment arbitraire, et un piston (10a) comprimé et entraîné par une pression de gaz dans le cylindre, qui comprime la circonférence de la bague (8) de déclenchement pour faire tourner la bague de déclenchement.

5. Rétracteur (1) de ceinture de sécurité selon la revendication 4, dans lequel la bague (8) de déclenchement est munie sur sa circonférence d'un contact (8b) qui vient en contact avec le piston (10a) et de plusieurs éléments coniques (8a) placés avec un espacement uniforme sur sa circonférence, et le boîtier (10) qui maintient la bague de déclenchement est muni de saillies (10d) correspondant aux éléments coniques de la bague de déclenchement.

6. Rétracteur (1) de ceinture de sécurité selon l'une quelconque des revendications 1 à 5, dans lequel le mécanisme d'embrayage est muni d'un support (13) de cliquet qui positionne et porte les cliquets (12) de liaison, et le support de cliquet est muni d'épaulements (13a) constitués d'une seule pièce avec lui, qui inclinent les cliquets de liaison dans la direction axiale et ne ramènent pas les cliquets de liaison dans leurs positions initiales après fonctionnement des cliquets de liaison.

7. Rétracteur (1) de ceinture de sécurité selon l'une quelconque des revendications 2 à 6, dans lequel le mécanisme d'absorption d'énergie inclut un chemin incurvé (2j) placé sur un côté du tambour (2) d'entraînement sur l'autre extrémité de la barre (4) de torsion, et un fil (2b) dont une extrémité (2g) est fixée sur un élément (2m) d'enroulement du corps (2a) de plaque, dont une partie sensiblement médiane est placée dans la rainure incurvée (2n).
